# EUROPÄISCHE PATENTANMELDUNG

(11) **EP 0 826 707 A1**
(43) Veröffentlichungstag der Anmeldung: **04.03.1998**
(21) Anmeldenummer: 97114427.4
(22) Anmeldetag: 21.08.1997
(51) Int. Cl.: C08G 18/40, C08G 18/28, C08K 5/3445, C08K 5/09

(54) **Lagerstabile, flammschutzmittelhaltige Polyolkomponente**

(30) Priorität: 29.08.1996 DE 19634886
(71) Anmelder: BASF AKTIENGESELLSCHAFT, 67056 Ludwigshafen (DE)
(72) Erfinder: Reichelt, Michael, 01945 Ruhland (DE); Hemsiek, Rainer, 49328 Melle (DE)

(57) **Zusammenfassung**

Die Erfindung betrifft lagerstabile, flammschutzmittelhaltige Polyolkomponenten, enthaltend mindestens ein Polyol sowie gegebenenfalls weitere höhermolekulare Verbindungen mit mindestens zwei reaktiven Wasserstoffatomen und gegebenenfalls niedermolekulare Kettenverlängerungs- und/oder Vernetzungsmittel sowie Treibmittel, Katalysatoren, Stabilisatoren und gegebenenfalls weitere Hilfsmittel und/oder Zusatzstoffe, dadurch gekennzeichnet, daß als Stabilisatoren Imidazole der allgemeinen Formel 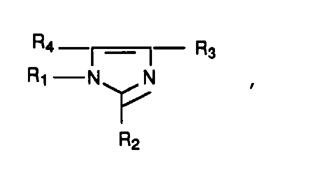 worin R₁ = (C₁- bis C₄-)Alkyl, (C₁- bis C₄-)Hydroxyalkyl oder Dimethylamino-(C₁- bis C₄-)alkyl und R2, R3, R4 = H oder (C₁- bis C₄-)Alkyl bedeuten, und/oder Ameisensäure eingesetzt werden sowie PUR-Hartschaumstoffe Isocyanatbasis, herstellbar durch Umsetzung dieser Polyolkomponenten mit organischen und/oder modifizierten organischen Polyisocyanaten und deren Verwendung als Isolationsmaterial im Bausektor.

## Beschreibung

Die Erfindung betrifft lagerstabile, flammschutzmittelhaltige Polyolkomponenten, die für die Herstellung von flammgeschützten Polyurethan (PUR)-Hartschaumstoffen auf Isocyanatbasis verwendet werden. Diese PUR-Hartschaumstoffe werden vorzugsweise im Bauwesen als Dämnstoffe eingesetzt.

Solche PUR-Hartschaumstoffe auf Isocyanatbasis enthalten als charakteristische Strukturelemente Urethan- und/oder Isocyanurat- und/oder Biuret- und/oder Allophanat- und/oder Urethdion- und/oder Harnstoff- und/oder Carbodiimidgruppen. In der Praxis hat es sich als vorteilhaft erwiesen, sogenannte Polyolkomponenten herzustellen. Dies sind flüssige Mischungen, die für die Herstellung von PUR-Hartschaumstoffen auf Isocyanatbasis notwendige Rezepturbestandteile, wie Polyole, Flammschutzmittel und Wasser sowie gegebenenfalls weitere Hilfs- und Zusatzstoffe, wie Katalysatoren, Verzögerer, physikalische Blähmittel, Schaumstabilisatoren, Weichmacher, Emulgatoren, Farbstoffe, Füllstoffe und Antiabsetzmittel, enthalten.

Eine zusammenfassende Übersicht über die Herstellung von PUR-Hartschaumstoffen und die verwendeten Einsatzstoffe wird z.B. im Kunststoff-Handbuch, Band VII, "Polyurethane", 1. Auflage 1966, herausgegeben von Dr. R. Vieweg und Dr. A. Höchtlen und 2. Auflage, 1983, sowie 3. Auflage, 1993, herausgegeben von Dr. G. Oertel. (Carl Hanser Verlag, München) gegeben.

Mit dem Austausch von FCKW durch alternative Blähmittel wird zunehmend das durch die Isocyanat-Wasser-Reaktion erzeugte CO₂ als alleiniges oder Co-Bläbmittel zu HFCKW, HFKW oder Kohlenwasserstoffen verwendet. Damit verbunden ist ein relativ hoher Wassergehalt in der Polyolkomponente. Dies führt insbesondere bei der gleichzeitigen Anwesenheit von Flammschutzmitteln zu Problemen während der Lagerzeit vor der Verarbeitung zum Hartschaumstoff. Infolge hydrolytischer Prozesse steigt der Säuregehalt der Polyolkomponente stetig an. Daraus resultieren zunehmend längere Reaktionszeiten bei der Verarbeitung mit der zugehörigen Isocyanatkomponente, wodurch sich die Verarbeitbarkeit verschlechtert und die Eigenschaften der resultierenden PUR-Hartschaumstoffe beeinträchtigt werden. Die Polyolkomponenten müssen gegebenenfalls durch nachträgliche Katalysatorzugabe nachgebessert oder im ungünstigsten Fall verworfen werden. Dies hat negative ökonomische Auswirkungen und die gewünschten, längeren Lagerzeiträume von mehreren Wochen oder Monaten lassen sich praktisch kaum realisieren. Die Suche nach lagerstabilen Polyolkomponenten ist daher eine wichtige technische Aufgabe.

In den Schriften BE 843 172, DE-A-3 607 964, EP-A-401 787, EP-A-410 467, EP-A-451 826, JP 12 56 511, JP 20 47 125, JP 30 33 120, JP 31 31 618, JP 40 55 419, JP 41 61 4 17, JP 42 02 215, JP 42 14 712, JP 52 09 034, JP 58 213 016, JP 60 084 319, JP 61 031 413, JP 61 031 414, JP 42 998 519, JP 50 70 544, US-A-4 165 412, US-A-431 753, US-A-4 481 309, US-A-5 240 964, WO 93 15 121 und WO 93 16 122 sind N-substituierte Imidazole als Katalysatoren zur Herstellung von PUR-Schäumen beschrieben.

JP 30 64 312 und EP-A-560 154 beschreiben die Verwendung von Ameisensäure als Blähmittel. Nach JP 50 31 989 wird eine Blähmittelkombination aus Freon 22 und Ameisensäure eingesetzt, die stabile pH-Werte und Gelzeiten während der Lagerung ergibt. In den Patentschriften EP 322 801 und JP 11 04 611 werden molare Mengen Ameisensäure bezogen auf den Aminkatalysator zur Katalysatormodifikation beschrieben.

Der vorliegenden Erfindung lag die Aufgabe zugrunde, geeignete Formulierungen für flammschutzmittelhaltige Polyolkomponenten zu finden, die eine ausreichende Lagerstabilität aufweisen und zu PUR-Hartschaumstoffen mit guten mechanischen und thermischen Kennwerten führen.

Diese Aufgabe wurde erfindungsgemäß dadurch gelöst, daß als Stabilisatoren Imidazole und/oder Ameisensäure eingesetzt werden.

Gegenstand der Erfindung sind demzufolge lagerstabile, flammschutzmittelhaltige Polyolkomponenten, enthaltend mindestens ein Polyol sowie gegebenenfalls weitere höhermolekulare Verbindungen mit mindestens zwei reaktiven Wasserstoffatomen und gegebenenfalls niedermolekulare Kettenverlängerungs- und/oder Vernetzungsmittel sowie Treibmittel, Katalysatoren, Stabilisatoren und gegebenenfalls weitere Hilfsmittel und/oder Zusatzstoffe, die dadurch gekennzeichnet sind, daß als Stabilisatoren Imidazole der allgemeinen Formel 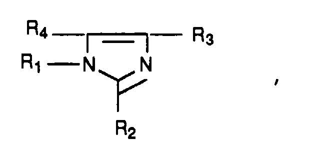 worin R₁ = (C₁- bis C₄-)Alkyl, (C₁- bis C₄-)Hydroxyalkyl oder Dimethylamino-(C₁- bis C₄-)Alkyl und R₂, R₃, R₄ = H oder (C₁- bis C₄-)Alkyl bedeuten, und/oder Ameisensäure eingesetzt werden.

Gegenstände der Erfindung sind weiterhin PUR-Hartschaumstoffe auf Isocyanatbasis, herstellbar durch Umsetzung dieser Polyolkomponenten mit organischen und/oder modifizierten organischen Polyisocyanaten sowie deren Verwendung als Isolationsmaterial im Bausektor.

Die erfindungsgemäßen Polyolkomponenten besitzen auch dann gute Lagerstabilitäten, wenn sie vergleichsweise hohe Mengen an Flammschutzmitteln, Wasser und Katalysatoren enthalten. Vorteilhaft ist weiterhin, daß durch die Stabilisatoren die Flammschutzwirkung nicht negativ beeinflußt wird und die Stabilisatoren in geringen Mengen verwendet werden können.

Als Imidazol werden vorzugsweise 1-Ethylimidazol, 1-Propylimidazol, 1-Butylimidazol, 1,3-Dimethylimidazol, 1,5-Dimethylimidazol, 1-Ethyl-2-methylimidazol, 1-Methyl-2-ethylimidazol, 1-Methyl-2-propylimidazol, 1-n-Butyl-2-methylimidazol, 1-Isobutyl-2-methylimidazol, 1-(3-Dimethylaminopropyl)-imidazol, 1,1'-(Oxodiethylen)bis(imidazol), 1,1'-(Oxodiethylen)bis(2-methylimidazol), ganz besonders bevorzugt 1-Methylimidazol und 1,2-Dimethylimidazol eingesetzt.

Die Imidazole können einzeln oder im Gemisch untereinander eingesetzt werden.

Als erfindungsgemäßer Stabilisator kommt ebenfalls Ameisensäure in Frage. Ameisensäure kann allein oder in Gemisch mit den oben beschriebenen Imidazolen zur Anwendung kommen.

Nach einer besonders vorteilhaften Ausführungsform und damit bevorzugt eingesetzt werden Kombinationen aus Ameisensäure mit 1-Methylimidazol oder 1,2-Dimethylimidazol.

Ameisensäure als Stabilisator wird üblicherweise in einer Menge von 0,01 bis 0,5, vorzugsweise von 0,05 bis 0,2 Gew.-%, bezogen auf die Polyolkomponente, eingesetzt.

Imidazole als Stabilisatoren werden üblicherweise in einer Menge von 0,1 bis 8, vorzugsweise von 0,5 bis 4 Gew.-%, bezogen auf die Polyolkomponente, eingesetzt.

Werden als Stabilisatoren Imidazole und Ameisensäure verwendet, so beträgt ihre Einsatzmenge insgesamt 0,1 bis 8,5 Gew.-%, bezogen auf die Polyolkomponente.

Es war überraschend und in keiner Weise vorhersehbar, daß sowohl die bisher als Blähmittel oder als Katalysatormodifikator bekannte Ameisensäure und die als Polyurethankatalysatoren bekannten substituierten Imidazole eine stabilisierende Wirkung in flammschutzmittelhaltigen Polyolkomponenten aufweisen und damit erstmalig eine Beherrschung des bisher völlig unbefriedigenden Lagerstabilitätsproblems der Polyolkomponenten ermöglichen. Besonders überraschend und nicht vorhersenbar war insbesondere, daß gerade nur die substituierten Imidazole aus der Vielzahl der Verbindungsklassen der tertiären Amine diese stabilisierende Wirkung aufweisen, um so mehr, da tertiäre Amine im allgemeinen das Lagerstabilitätsproblem eher verschärfen. Bezüglich der stabilisierenden Wirkung der Ameisensäure ist hervorzuheben, daß diese schon bei solch niedrigen Gehalten auftritt, bei denen eine blähende Wirkung praktisch noch nicht beobachtet wird.

Es wurde somit ein wirtschaftliches Verfahren zur Herstellung von lagerstabilen, flammschutzmittelhaltigen Polyolkomponenten entwickelt, die sich hervorragend zu PUR-Hartschaumstoffen, die sich sehr gut als Isoliermaterial im Bauwesen eignen, verarbeiten lassen.

Die lagerstabilen, flammschutzmittelhaltigen Polyolkomponenten enthalten mindestens ein Polyol sowie gegebenenfalls weitere höhermolekulare Verbindungen mit mindestens zwei reaktiven Wasserstoffatomen und gegebenenfalls niedermolekulare Kettenverlängerungs- und/oder Vernetzungsmittel sowie Treibmittel, Katalysatoren, Stabilisatoren und gegebenenfalls weitere Hilfsmittel und/oder Zusatzstoffe.

Zur Herstellung der erfindungsgemäßen lagerstabilen, flammschutzmittelhaltigen Polyolkomponenten finden, mit Ausnahme der speziellen Stabilisatoren, die an sich bekannten Aufbaukomponenten Verwendung, zu denen im einzelnen folgendes auszuführen ist:

Als Polyole sowie gegebenenfalls mitzuverwendende weitere höhermolekulare Verbindungen mit mindestens zwei reaktiven Wasserstoffatomen werden zweckmäßigerweise solche mit einer Funktionalität von 2 bis 8, vorzugsweise 2 bis 6, und einem Molekulargewicht von 300 bis 8000, vorzugsweise von 300 bis 3000, verwendet. Bewährt haben sich z.B. Polyetherpolyamine und/oder vorzugsweise Polyole ausgewählt aus der Gruppe der Polyetherpolyole, Polyesterpolyole, Polythioetherpolyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyesterpolyole und/oder Polyetherpolyole. Der Hydroxylzahl der Polyhydroxylverbindungen beträgt dabei in aller Regel 150 bis 850 mg KOH/g und vorzugsweise 200 bis 600 mg KOH/g .

Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei-und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton oder Hydroxycarbonsäuren, z.B. ω-Hydroxycapronsäure.

Zur Herstellung der Polyesterpolyole können die organischen, z.B. aromatischen und vorzugsweise aliphatischen, Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a., in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyesterpolyole werden die organischen Polycarbonsäuren und/oder -derivate und mehrwertigen Alkohole vorteilhafterweise im Molverhältnis von 1:1 bis 1,8, vorzugsweise 1:1,05 bis 1,2, polykondensiert.

Die erhaltenen Polyesterpolyole besitzen vorzugsweise eine Funktionalität von 2 bis 4, insbesondere 2 bis 3, und ein Molekulargewicht von 480 bis 3000, vorzugsweise 600 bis 2000 und insbesondere 600 bis 1500.

Insbesondere als Polyole verwendet werden jedoch Polyetherpolyole, die nach bekannten Verfahren, beispielsweise durch anionische Polymerisation mit Alkalihydroxiden, wie z. B. Natrium- oder Kaliumhydroxid oder Alkalialkoholaten, wie z. B. Natriummethylat, Natrium- oder Kaliumethylat oder Kaliumisopropylat, als Katalysatoren und unter Zusatz mindestens eines Startermoleküls, das 2 bis 8, vorzugsweise 2 bis 6, reaktive Wasserstoffatome gebunden enthält, oder durch kationische Polymerisation mit Lewis-Säuren, wie Antimonpentachlorid, Borfluorid-Etherat u.a. oder Bleicherde, als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsübstituiertes Ethylendiamin, Diethylentriamin, Triethylentetramin, 1,3-Propylendiamin, 1,3-bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.

Als Startermoleküle kommen ferner in Betracht: Alkanolamine, wie z.B. Ethanolamin, N-Methyl- und N-Ethyl-ethanolamin, Dialkanolamine, wie z.B. Diethanolamin, N-Methyl- und N-Ethyl-diethanolamin, und Trialkanolamine, wie z.B. Triethanolamin, und Ammoniak. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylolpropan, Pentaerythrit, Sorbit und Saccharose.

Die Polyetherpolyole, vorzugsweise Polyoxypropylen- und Polyoxypropylen-polyoxyethylenpolyole, besitzen eine Funktionalität von vorzugsweise 2 bis 8 und insbesondere 2 bis 6 und Molekulargewichte von 300 bis 3000, vorzugsweise 300 bis 2000 und insbesondere 400 bis 2000 und geeignete Polyoxytetramethylenglykole ein Molekulargewicht bis ungefähr 3500.

Als Polyetherpolyole eignen sich ferner polymermodifizierte Polyetherpolyole, vorzugsweise Pfropfpolyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyether-polyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden, sowie Polyetherpolyoldispersionen, die als disperse Phase, üblicherweise in einer Menge von 1 bis 50 Gew.%, vorzugsweise 2 bis 25 Gew.%, enthalten: z.B. Polyharnstoffe, Polyhydrazide, tert.-Aminogruppen gebunden enthaltende Polyurethane und/oder Melamin und die z.B. beschrieben werden in der EP-B-011 752 (US 4 304 708), US-A-4 374 209 und DE-A-32 31 497.

Die Polyetherpolyole können ebenso wie die Polyesterpolyole einzeln oder in Form von Mischungen verwendet werden. Ferner können sie mit den Pfropfpolyetherpolyolen oder Polyesterpolyolen sowie den hydroxylgruppenhaltigen Polyesteramiden, Polyacetalen, Polycarbonaten und/oder Polyetherpolyaminen gemischt werden.

Als hydroxylgruppenhaltige Polyacetale kommen z.B. die aus Glykolen, wie Diethylenglykol, Triethylenglykol, 4,4'-Dihydroxy-ethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-1,3, Butandiol-1,4 und/oder Hexandiol-1,6, Diethylenglykol, Triethylenglykol oder Tetraethylenglykol mit Diarylcarbonaten, z.B. Diphenylcarbonat, oder Phosgen hergestellt werden können.

Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.

Geeignete Polyetherpolyamine können aus den obengenannten Polyetherpolyolen nach bekannten Verfahren hergestellt werden. Beispielhaft genannt seien die Cyanoalkylierung von Polyoxyalkylenpolyolen und anschließende Hydrierung des gebildeten Nitrils (US 3 267 050) oder die teilweise oder vollständige Aminierung von Polyoxyalkylenpolyolen mit Aminen oder Ammoniak in Gegenwart von Wasserstoff und Katalysatoren (DE 12 15 373).

Die lagerstabilen, flammschutzmittelhaltigen Polyolkomponenten können in Abhängigkeit von den gewünschten Eigenschaften der daraus zu erzeugenden PUR-Hartschaumstoffe ohne oder unter Mitverwendung von Kettenverlängerungs- und/oder Vernetzungsmitteln hergestellt werden. Zur Modifizierung der mechanischen Eigenschaften, z.B. der Härte, kann sich der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden Diole und/oder Triole mit Molekulargewichten kleiner als 400, vorzugsweise von 60 bis 300. In Betracht kommen beispielsweise aliphatische, cycloaliphatische und/ oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder l,2-Propylenoxid und den vorgenannten Diolen und/oder Triolen als Startermoleküle.

Sofern zur Herstellung der Polyurethanhartschaumstoffe Kettenverlängerungsmittel, Vernetzungsmittel oder Mischungen davon Anwendung finden, kommen diese zweckmäßigerweise in einer Menge von 0 bis 20 Gew.-%, vorzugsweise von 2 bis 8 Gew.-%, bezogen auf das Gewicht der eingesetzten Polyole sowie gegebenenfalls mitzuverwendenden weiteren höhermolekularen Verbindungen mit mindestens zwei reaktiven Wasserstoffatomen, zum Einsatz.

Wie oben bereits ausgeführt, wird im Austausch von FCKW durch alternative Treibmittel zunehmend Wasser als alleiniges oder Co-Treibmittel eingesetzt, wobei die treibende Wirkung des durch die Isocyanat-Wasser-Reaktion erzeugten CO₂ genutzt wird. Darüber hinaus können physikalische Treibmittel mitgenutzt werden.

Geeignet sind Flüssigkeiten, welche gegenüber den organischen, gegebenenfalls modifizierten Polyisocyanaten, die bei der Weiterverarbeitung der erfindungsgemäßen Polyolkomponente zu PUR-Hartschaumstoffen verwendet werden, inert sind und Siedepunkte unter 100°C, vorzugsweise unter 50°C, insbesondere zwischen -50°C und 30°C bei Atmosphärendruck aufweisen, so daß sie unter dem Einfluß der exothermen Polyadditionsreaktion verdampfen. Beispiele derartiger, vorzugsweise verwendbarer Flüssigkeiten sind Alkane, wie Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlordifluorethane, 1,1-Dichlor-2,2,2-trifluorethan, 2,2- Dichlor-2-fluorethan und Heptafluorpropan. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Ameisensäure, Essigsäure, Oxalsäure, Ricinolsäure und carboxylgruppenhaltige Verbindungen.

Vorzugsweise Verwendung finden Wasser, Chlordifluormethan, Chlordifluorethane, Dichlorfluorethane, Pentangemische, Cyclohexan und Mischungen aus mindestens zwei dieser Treibmittel, z.B. Mischungen aus Wasser und Cyclohexan, Mischungen aus Chlordifluormethan und 1-Chlor-2,2-difluorethan und gegebenenfalls Wasser.

Dient Wasser als Treibmittel, so wird es vorzugsweise in einer Menge von 0,5 bis 5 Gew.-% zugesetzt. Der Wasserzusatz kann in Kombination mit dem Einsatz der anderen beschriebenen Treibmittel erfolgen.

Die gesamte eingesetzte Menge des Treibmittels bzw. der Treibmittelmischung liegt bei 1 bis 25 Gew.-%, vorzugsweise 5 bis 15 Gew.-%.

Die angegebenen Mengen beziehen sich jeweils auf das Gewicht der gesamten Polyolkomponente.

Als Katalysatoren werden die bei der Herstellung von PUR-Hartschaumstoffen üblichen Verbindungen eingesetzt, die die Reaktion der reaktive Wasserstoffatome, insbesondere Hydroxylgruppen, enthaltenden Verbindungen der Polyolkomponente mit den organischen, gegebenenfalls modifizierten Polyisocyanaten stark beschleunigen.

Zweckmäßigerweise verwendet werden basische PUR-Katalysatoren, beispielsweise tertiäre Amine, wie Triethylamin, Tributylamin, Dimethylbenzylamin, Dicyclohexylmethylamin, Dimethylcyclohexylamin, N,N,N',N'-Tetramethyl-diamino-diethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Dimethylpiperazin, N-Dimethylaminoethylpiperidin, 1-Azabicyclo-(2,2,0)-octan, 1,4-Diazabicyclo-(2,2,2)-octan(Dabco) und Alkanolaminverbindungen, wie Triethanolamin, Triisopropanolamin, N-Methyl- und N-Ethyl-diethanolamin, Dimethylaminoethanol, 2-(N,N-Dimethylaminoethoxy)ethanol, N,N',N''-Tris-(dialkylaminoalkyl)hexahydrotriazine, z.B. N, N', N''-Tris-(dimethylaminopropyl)-s-hexahydrotriazin, und Triethylendiamin. Geeignet sind jedoch auch Metallsalze, wie Eisen(II)-chlorid, Zinkchlorid, Bleioctoat, Bismutoctoat und vorzugsweise Zinnsalze, wie Zinndioctoat, Zinndiethylhexoat und Dibutylzinndilaurat sowie insbesondere Mischungen aus tertiären Aminen und organischen Zinnsalzen.

Als Katalysatoren kommen ferner in Betracht: Amidine, wie 2,3-Dimethyl-3,4,5,6-tetrahydropyrimidin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-%, Katalysator bzw. Katalysatorkombination, bezogen auf das Gewicht der gesamten Polyolkomponente.

Die erfindungsgemäßen Polyolkomponenten sind flammschutzmittelhaltig. Als Flammschutzmittel sind alle für diesen Zweck üblicherweise in PUR-Hartschaumstoffen eingesetzten Verbindungen geeignet.

Beispielhaft seien genannt: Diphenylkresylphosphat, Trikresylphosphat, Triethyl- oder Tributylphosphat, Tris-(2-chlorethyl)phosphat, Tris-(2-chlorpropyl)phosphat, Tris(1,3-dichlorpropyl)phosphat, Tetrakis-(2-chlorethyl)-ethylendiposphat, Diethylethanphosphonat und Diethanolaminomethylphosphonsäurediethylester.

Geeignet sind weiterhin bromhaltige Flammschutzmittel, wie Tribromneopentylalkohol, Umsetzungsprodukte von Tribromneopentylalkohol, Dibromneopentylglykol und dessen Umsetzungsprodukte, Dibrombutendiol und dessen Umsetzungsprodukte, 2,3-Dibrompropanol und dessen Umsetzungsprodukte, Tetrabromphthalsäureanhydrid und dessen Umsetzungsprodukte, Tribromphenol und dessen Umsetzungsprodukte, Tetrabrombisphenol A und dessen Umsetzungsprodukte, bromhaltige Phosphorsäureester und bromierte Kohlenwasserstoffe.

Außer den bereits genannten Verbindungen können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Gyanursäurederviate, wie z. B. Melamin und Blähgraphit und/oder gegebenenfalls aromatische Polyester zum Flammfestmachen der Polyisocyanat-polyadditionsprodukte verwendet werden.

Vorzugsweise eingesetzte Flammschutzmittel sind bei Raumtemperatur flüssig und weisen einen Chlorgehalt von mindestens 20 Gew.-% oder einen Bromgehalt von mindestens 30 Gew.-% oder einen Phosphorgehalt von mindestens 5 Gew.-% auf.

Im allgemeinen hat es sich als zweckmäßig erwiesen, 10 bis 80 Gew.-%, vorzugsweise 30 bis 60 Gew.-%, der genannten Flammschutzmittel, bezogen auf das Gewicht der gesamten Polyolkomponente, zu verwenden.

Den erfindungsgemäßen lagerstabilen, flammschutzmittelhaltigen Polyolkomponenten können gegebenenfalls noch weitere Hilfsmittel und/oder Zusatzstoffe einverleibt werden. Genannt seien beispielsweise oberflächenaktive Sübstanzen, Schaumstabilisatoren, Zellregler, Füllstoffe, Farbstoffe, Pigmente, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 5 Gew.-%, bezogen auf das Gewicht der gesamten Polyolkomponente, angewandt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Fullstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern.

Die anorganischen und organischen Füllstoffe können einzeln oder als Gemische verwendet werden und werden der Reaktionsmischung vorteilhafterweise in Mengen von 0,5 bis 50 Gew.%, vorzugsweise 1 bis 40 Gew.%, bezogen auf das Gewicht der gesamten Polyolkomponente, einverleibt.

Nähere Angaben über die oben genannten üblichen Hilfs- und Zusatzstoffe sind der Fachliteratur, beispielsweise der Monographie von J.H. Saunders und K.G. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1. 2. und 3. Auflage, 1966, 1983 und 1993, zu entnehmen.

Die erfindungsgemäßen lagerstabilen, flammschutzmittelhaltigen Polyolkomponenten eignen sich prinzipiell zur Herstellung aller Arten von PUR-Hartschaumstoffen nach den an sich üblichen Verfahren.

Bei diesen Hartschaumstoffen handelt es sich vor allem um solche, die als charakteristische chemische Strukturelemente Urethan- und/oder Isocyanurat- und/oder Biuret- und/oder Allophanat- und/oder Urethdion und/oder Harnstoff- und/oder Carbodiimidgruppen enthalten.

Sie werden hergestellt durch Umsetzung der erfindungsgemäßen Polyolkomponente mit organischen und/oder modifizierten organischen Polyisocyanaten.

Als organische und/oder modifizierten organische Polyisocyanate kommen die an sich bekannten aliphatischen, cycloaliphatischen, araliphatischen und vorzugsweise die aromatischen mehrwertigen Isocyanate in Frage.

Im einzelnen seien beispielhaft genannt: Alkylendiisocyanate mit 4 bis 12 Kohlenstoffatomen im Alkylenrest, wie 1,12-Dodecandiisocyanat, 2-Ethyl-tetramethylendiisocyanat-1,4, 2-Methylpentamethylendiisocyanat-1,5, Tetramethylendiisocyanat-1,4, und vorzugsweise Hexamethylendiisocyanat-1,6; cycloaliphatische Diisocyanate wie Cyclohexan-1,3- und 1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Di- und Polyisocyanate, wie z.B. 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 2,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten. Die organischen Di- und Polyisocyanate können einzeln oder in Form ihrer Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, modifiziertes 4,4'-Diphenylmethandiisocyanat, modifizierte 4,4'- und 2,4'-Diphenylmethandiisocyanatmischungen, modifiziertes Roh-MDI oder 2,4- bzw. 2,6-Toluylendiisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylenpolyoxyethenglykole, -triole und/oder -tetrole. Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus den nachfolgend beschriebenen Polyester- und/oder vorzugsweise Polyetherpolyolen und 4,4'-Diphenylmethandiisocyanat, Mischungen aus 2,4'- und 4,4'-Diphenylmethandiisocyanat, 2,4- und/oder 2,6-Toluylendiisocyanaten oder Roh-MDI. Bewährt haben sich ferner flüssige, Carbodiiimidgruppen und/oder Isocyanuratringe enthaltende Polyisocyanate mit NCO-Gehalten von 33,6 bis 15, vorzugsweise 31 bis 21 Gew.-%, bezogen auf das Gesamtgewicht, z.B. auf Basis von 4,4'-, 2,4'- und/oder 2,2'-Diphenylmethandiisocyanat und/oder 2,4- und/oder 2,6-Toluylendiisocyanat.

Die modifizierten Polyisocyanate können miteinander oder mit unmodifizierten organischen Polyisocyanaten wie z.B. 2,4'-, 4,4'-Diphenylmethandiisocyanat, Roh-MDI, 2,4- und/oder 2,6-Toluylendiisocyanat gegebenenfalls gemischt werden.

Besonders bewährt haben sich als organische Polyisocyanate und kommen daher vorzugsweise zur Anwendung: Mischungen aus Toluylendiisocyanaten und Roh-MDI oder Mischungen aus modifizierten, Urethangruppen enthaltenden organischen Polyisocyanaten mit einem NCO-Gehalt von 33,6 bis 15 Gew.-%, insbesondere solche auf Basis von Toluylendiisocyanaten, 4,4'-Diphenylmethandiisocyanat, Diphenylmethandiisocyanat-Isomerengemischen oder Roh-MDI und insbesondere Roh-MDI mit einem Diphenylmethandiisocyanat-Isomerengehalt 30 bis 80 Gew.-%, vorzugsweise von 30 bis 60 Gew.-%, insbesondere von 30 bis 55 Gew.-%.

Der Reaktionsmischung können neben der erfindungsgemäßen Polyolkomponente und den organischen und/oder modifizierten organischen Polyisocyanaten noch weitere Hilfs- und/oder Zusatzstoffe, wie sie weiter oben beschrieben wurden, zugesetzt werden.

Zur Herstellung der PUR-Hartschaumstoffe werden die organischen und/oder modifizierten organischen Polyisocyanate mit der erfindungsgemäßen Polyolkomponente im Beisein von ggf. weiteren Hilfs- und/oder Zusatzstoffen in solchen Mengen zur Umsetzung gebracht, daß das Äquivalenzverhältnis von NCO-Gruppen der Polyisocyanate zur Summe der reaktiven Wasserstoffatome der Polyolkomponenten 0,85 bis 1,25:1, vorzugsweise 0,95 bis 1,15:1 und insbesondere 1 bis 1,05:1, beträgt.Falls die PUR-Hartschaumstoffe zumindest teilweise Isocyanuratgruppen gebunden enthalten, wird üblicherweise ein Verhältnis von NCO-Gruppen der Polyisocyanate zur Summe der reaktiven Wasserstoffatome der Polyolkomponente von 1,5 bis 60:1, vorzugsweise 1,5 bis 8:1, angewandt.

Die PUR-Hartschaumstoffe werden vorteilhafterweise nach dem one shot-Verfahren, beispielsweise mit Hilfe der Hochdruck- oder Niederdruck-Technik in offenen oder geschlossenen Formwerkzeugen, beispielsweise metallischen Formwerkzeugen, hergestellt. Üblich ist auch das kontinuierliche Auftragen des Reaktionsgemisches auf geeigneten Bandstraßen zur Erzeugung von Paneelen.

Die erfindungsgemäßen PUR-Hartschaumstoffe auf Isocyanatbasis werden vorzugsweise nach dem Gieß- oder Sprühverfahren hergestellt. Insbesondere wird dabei die Block- oder Formverschäumung oder die kontinuierliche Fertigung nach dem Doppeltransportbandverfahren angewendet.

Die Ausgangskomponenten werden üblicherweise bei einer Temperatur von 15 bis 90°C, vorzugsweise von 20 bis 60°C und insbesondere von 20 bis 35°C, gemischt und in das offene oder gegebenenfalls unter erhöhtem Druck in das geschlossene Formwerkzeug eingebracht oder bei einer kontinuierlichen Arbeitsstation auf ein Band, das die Reaktionsmasse aufnimmt, aufgetragen. Die Vermischung kann mittels eines Rührers oder einer Rührschnecke durchgeführt werden. Die Formwerkzeugtemperatur beträgt zweckmäßigerweise 20 bis 110°C, vorzugsweise 30 bis 60°C und insbesondere 45 bis 50°C.

Die nach dem erfindungsgemäßen Verfahren hergestellten PUR-Hartschaumstoffe weisen eine Dichte von 0,02 bis 0,30 g/cm³, vorzugsweise von 0,025 bis 0,24 g/cm³ und insbesondere von 0,03 bis 0,1 g/cm³, auf.

Sie weisen gute mechanische und thermische Kennwerte auf.

Die Produkte finden vorzugsweise als wärmedämmende Baustoffe Anwendung.

Die Erfindung wird in den nachfolgenden Ausführungsbeispielen näher erläutert.

### Beispiele 1 bis 6 und Vergleichsbeispiel 1

Es wurde eine Grundmischung aus folgenden Bestandteilen hergestellt:
- 28 Masseteile: Polyetheralkohol auf Basis Saccharose/Glycerol/Propylenoxid (Hydroxylzahl 440),
- 26 Masseteile: Polyetheralkohol auf Basis Glycerol/Propylenoxid (Hydroxylzahl 400),
- 22 Masseteile: Flammschutzmittel Trischlorpropylphosphat,
- 4 Masseteile: Flammschutzmittel auf Basis Tetrabromphthalsäure/Glykol (Hydroxylzahl 215),
- 15 Masseteile: Flammschutzmittel auf Basis Dibrombutendiol/Epichlorhydrin/Propylenoxid (Hydroxylzahl 330),
- 1,5 Masseteile: Schaumstabilisator auf siliciumorganischer Basis und
- 3,5 Masseteile: Wasser.

Aus dieser Grundmischung wurden durch Vermischen mit den in Tabelle 1 angegebenen Zusätzen die fertigen Polyolkomponenten hergestellt.

### Vergleichsbeispiel 2

In der oben beschriebenen Grundmischung wurden die 3,5 Masseteile Wasser durch 5 Masseteile Ameisensäure (98 %ig) ersetzt und 1,5 Masseteile Dimethylcycloherylamin zugegeben. Durch Vermischen der Ausgangsstoffe wurde die fertige Polyolkomponente hergestellt. Die vergleichsweise hohe Menge Ameisensäure wirkt hier als Blähmittel; eine stabilisierende Wirkung tritt nicht ein.

### Bestimmung des Lagerstabilitätsverhaltens

Die Bestimmung des Lagersabilitätsverhaltens- erfolgte durch Lagerung bei 45°C über einen Zeitraum von zwei Wochen. Als Maß für die Lagerstabilität wurde die Anderung der Abbindezeit (Fadenziehzeit) nach Lagerung im prozentualen Verhältnis zur Abbindezeit unmittelbar nach Herstellung der Polyolkomponente bestimmt. Die Ermittlung der Abbindezeit erfolgte mittels Bechertest, wobei 42 g Polyolkomponente mit 58 g Roh-Diphenylmethandiisocyanat (NCO-Gehalt 31,6%) vermischt wurden. Als Abbindezeit wurde die Zeit ermittelt, nach der sich mit einem Glasstab frühestmöglich Fäden aus dem aufsteigenden Reaktionsgemisch ziehen lassen. Die ermittelten Abbindezeiten sind in Tabelle 1 aufgeführt.

An den Beispielen ist deutlich sichtbar, daß die Formulierungen mit den erfindungsgemäßen Stabilisatoren eine deutlich verbesserte Lagerstabilität, bezogen auf die Vergleichsbeispiele, aufweisen.

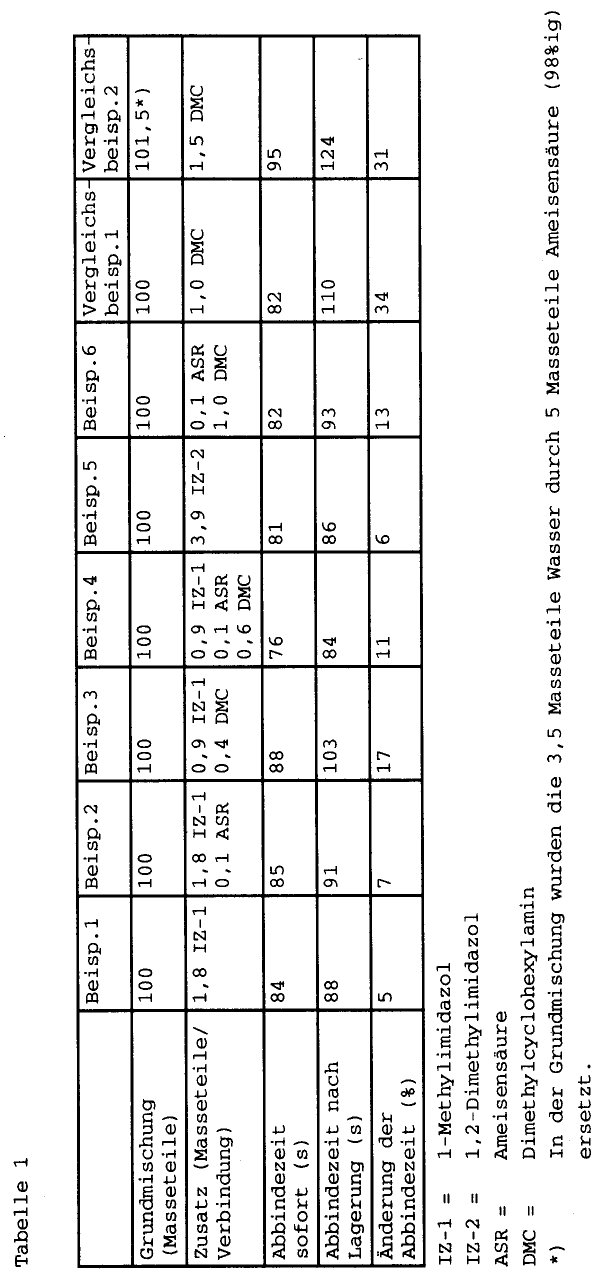

### Beispiel 7 bis 9

In einer Presse wurden jeweils zwei Stahldeckschichten von 0,8 mm Stärke der Abmessungen 1000 mm x 2000 mm im Abstand von 60 mm angeordnet. Der Hohlraum zwischen den Deckschichten wurde mit jeweils 5,8 kg Reaktionsgemisch ausgeschäumt. Die Reaktionsgemische wurden durch Vermischen von jeweils 2,436 kg der Polyolkomponenten der Beispiele 1, 4 und 6 mit jeweils 3,364 kg Roh-MDI (NCO-Gehalt: 31,6 %) hergestellt. Nach dem Aushärten wurden die Sandwichelemente der Presse entnommen.

Die Bauelemente waren zur Wärmedämmung einsetzbar und erfüllten die Anforderungen an die Baustoffklasse B1 nach DIN 4102.

Die hergestellten Polyurethanschaumstoffe wiesen jeweils eine Bruttorohdichte von 48 kg/m³ und eine Kernrohdichte von 45 kg/m³ auf.

## Patentansprüche

1. Lagerstabile, flammschutzmittelhaltige Polyolkomponente, enthaltend mindestens ein Polyol sowie gegebenenfalls weitere höhermolekulare Verbindungen mit mindestens zwei reaktiven Wasserstoffatomen und gegebenenfalls niedermolekulare Kettenverlängerungs- und/oder Vernetzungsmittel sowie Treibmittel, Katalysatoren, Stabilisatoren und gegebenenfalls weitere Hilfsmittel und/oder Zusatzstoffe, dadurch gekennzeichnet, daß als Stabilisatoren Imidazole der allgemeinen Formel 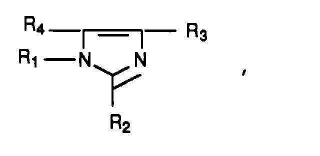 worin R₁ = (C₁- bis C₄-)Alkyl, (C₁- bis C₄-)Hydroxyalkyl oder Dimethylamino-(C₁- bis C₄-)alkyl und R₂, R₃, R₄ = H oder (C₁-bis C₄-)Alkyl bedeuten, und/oder Ameisensäure eingesetzt werden.

2. Polyolkomponente nach Anspruch 1, dadurch gekennzeichnet, daß als Imidazol 1-Methylimidazol und/oder 1,2-Dimethylimidazol eingesetzt wird.

3. Polyolkomponente nach Anspruch 1, dadurch gekennzeichnet, daß als Stabilisator Imidazole in einer Menge von 0,1 bis 8 Gew.-%, bezogen auf die Polyolkomponente, eingesetzt werden.

4. Polyolkomponente nach Anspruch 1, dadurch gekennzeichnet, daß als Stabilisator Ameisensäure in einer Menge von 0,01 bis 0,5 Gew.-%, bezogen auf die Polyolkomponente, eingesetzt wird.

5. Polyurethanhartschaumstoffe auf Isocyanatbasis, herstellbar durch Umsetzung der Polyolkomponente gemäß Anspruch 1 mit organischen und/oder modifizierten organischen Polyisocyanaten.

6. Verwendung der Polyurethanhartschaumstoffe auf Isocyanatbasis nach Anspruch 5 als Isolationsmaterial im Bausektor.
